# EUROPEAN PATENT SPECIFICATION

(11) **EP 1 464 881 B1**
(45) Date of publication and mention of the grant of the patent: **30.05.2007**
(21) Application number: 03078211.4
(22) Date of filing: 10.10.2003
(51) Int. Cl.: F16L 3/133

(54) **Attachment system**
Befestigungssystem
Système de fixation

(30) Priority: 11.10.2002 NL 1021633
(43) Date of publication of application: 06.10.2004
(73) Proprietor: J. van Walraven Holding B.V., 3641 RK Mijdrecht (NL)
(72) Inventor: van Walraven, Jan, 3641 GP Mijdrecht (NL)
(74) Representative: Brookhuis, Hendrik Jan Arnold

(56) References cited:
- DE-U- 29 720 714
- US-A- 2 158 802

## Description

The present invention relates to an attachment system in accordance with the preamble of claim 1.

It is known to attach a pipe clip to a wall by means of an elongate element, the pipe clip lying substantially in line with the elongate element, i.e. generally in such a manner that the centre point of the (annular) body of the pipe clip lies substantially on the longitudinal axis of the elongate element. The elongate element is then attached to the wall, for example to an upright wall or a ceiling, by means of a first end via a wall-attachment element. The second end of the elongate element is attached directly or indirectly to the pipe clip.

The elongate element used is usually a threaded rod, one end of which is screwed into the wall-attachment element. The pipe clip is provided with a threaded hole, by means of which it is screwed onto the other end of the threaded rod.

If high forces are exerted on an attachment system of this type, in particular at right angles to the longitudinal direction of the elongate element, a threaded rod has often proven to be insufficiently strong. In such cases, in practice the elongate element used is a gas pipe with a relatively large diameter, in particular with a diameter of 12,7 mm (1/2") or above. In this case, a screw thread is applied to or inside the two ends of gas pipe, for the purpose of securing the gas pipe to the wall-attachment element and the pipe clip.

One drawback of the use of a modified gas pipe of this nature is that it is difficult and time-consuming to apply a screw thread to a pipe of this type. Moreover, the fitting of a pipe clip, using an attachment system of this type, takes up considerable time and requires a high level of accuracy.

Another drawback of using a gas pipe or a threaded rod is that the length of the gas pipe or threaded rod has to be measured and produced accurately, since the attachment system offers little flexibility with regard to the adjustment of the distance between the wall and the pipe clip.

One object of the invention is to create an improved attachment system which eliminates one or more of the above drawbacks.

The object is achieved by providing an attachment system in accordance with claim 1.

The use of a profiled section where a coupling element is placed and fixed in or over the second end of the profiled section allows simple mounting of a pipe clip on a wall.

The profiled section has a substantially square or rectangular cross section, in particular what is known as a C section. Furthermore, the profiled section may be assembled from a plurality of profiled-section elements.

The profiled section is hollow. It will be clear that if the coupling element is placed in the second end of the profiled section, the profiled section has to be hollow.

The coupling element is preferably designed in such a manner that the centre point of a generally annular body of a pipe clip which is attached using the attachment system according to the invention lies substantially on the longitudinal axis of the profiled section.

The coupling element is preferably substantially complementary to the profiled section. A coupling element of this type is easy to place in or over the profiled section and provides a good connection to the profiled section after it has been attached. This allows forces which are exerted on a pipe clip attached using the attachment system in a direction at right angles to the longitudinal direction of the profiled section to be successfully absorbed by the attachment system. An embodiment of this type also makes it possible to prevent any play between the profiled section and the coupling element of the attachment system.

The coupling element, in the longitudinal direction of the profiled section, can advantageously be fixed at various positions with respect to the profiled section. With a design of the attachment between the coupling element and the profiled section of this type, it is possible to adjust the distance between a pipe clip which has been attached using the attachment system according to the invention and the wall within a certain range. It is therefore not necessary for the required length of the profiled section to be measured very accurately in advance and produced with a corresponding degree of accuracy.

To impart further strength and rigidity to the attachment system, the attachment system, in one possible embodiment, comprises one or more struts. These struts are preferably standard elongate profiled sections, a first end of which is connected to the wall and a second end of which is connected to the profiled section.

The invention will be explained in more detail below on the basis of an embodiment of the attachment system according to the invention and with reference to the appended drawing, in which:
Fig. 1 shows a side view of an exemplary embodiment of the attachment system according to the invention.
Fig. 2 shows a side view of the embodiment of the attachment system shown in Fig. 1 with a first strut having been fitted.

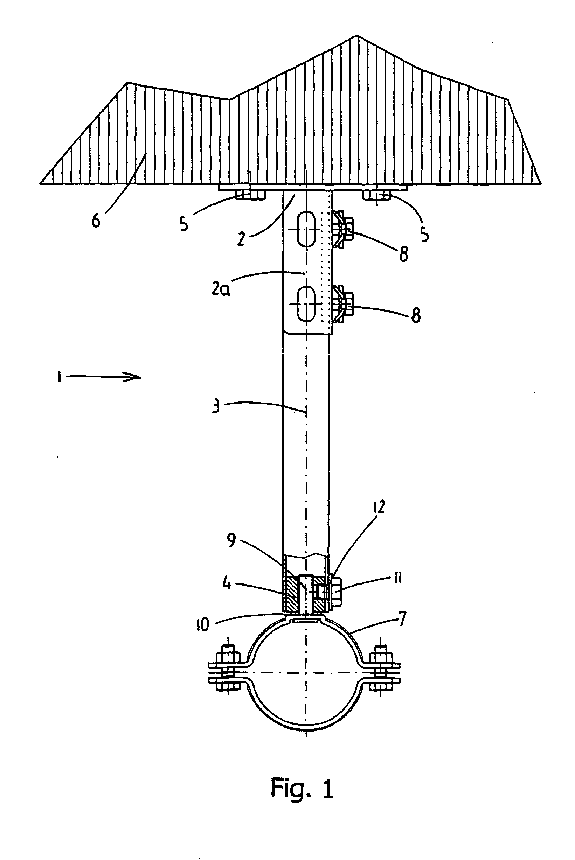

Figure 1 shows an example of an attachment system according to the invention, denoted overall by reference numeral 1. The attachment system 1 comprises a wall-attachment element 2, a hollow profiled section 3 and a coupling element 4. The wall-attachment element 2 has been attached to a wall 6, for example an upright wall or a ceiling, by means of threaded bolts 5.

A pipe clip 7, which is suitable for receiving a pipe or the like, has been attached to the coupling element 4 on its side which is remote from the wall 6. The pipe clip 7 shown has an annular body. If appropriate, it is also possible to provide a body with a different shape for receiving a corresponding pipe or the like.

The hollow profiled section 3 may be, square or rectangular in cross section. To implement the invention, there is no need for the coupling element 4 to be completely surrounded by the hollow profiled section 3. According to the invention, a standard so-called C-section is used which has a square or rectangular cross section with a slot arranged over the entire length on one side and optionally a series of (slot-shaped) openings provided on the opposite side, these openings being arranged at regular intervals in the longitudinal direction.

A first end of the hollow profiled section 3 has been attached to the wall-attachment element 2 by means of two threaded bolts 8. By means of this bolted connection, it is possible to adjust the profiled section to a defined distance with respect to the wall. The wall-attachment element 2 comprises a hollow section 2a which at least partially surrounds the hollow profiled section 3, i.e. in this case does so on three sides. The internal cross section of this section 2a is substantially complementary to the external cross section of the hollow profiled section 3, so that a robust connection is produced between the wall-attachment element 2 and the hollow profiled section 3.

It is also possible for the wall-attachment element to be designed in such a manner that it can be placed at least partially in the hollow profiled section, in which case the internal cross section of the hollow profiled section is then preferably complementary to the external cross section of the section of the wall-attachment element which is placed in the hollow profiled section.

In another embodiment, it is also possible for the hollow profiled section 3 and the wall-attachment element 2 to be formed integrally.

In yet another embodiment, it is possible for the wall-attachment element 2 and the hollow profiled section 3 to be attached to one another by means of a second coupling element 4', which second coupling element 4' is designed in a corresponding way to the first coupling element 4 which connects the hollow profiled section 3 to a pipe clip 7.

In an embodiment of this type, it may advantageously be possible for the coupling element 4' to be fixed in various positions with respect to the hollow profiled section, so that the distance between the hollow profiled section and the wall-attachment element can be adjusted within a certain range, and thereby so can the distance between the hollow profiled section and the wall.

In this embodiment, the wall-attachment element may be a wall plate which is provided with a threaded part projecting from the wall, for example a stud welded to the wall plate or a bolt fitted through the wall plate, the head of which is optionally welded to the wall plate.

The coupling element 4 shown is designed as a rectangular block, in which case the external cross section of the coupling element 4 substantially corresponds to the internal cross section of the hollow profiled section 3. The block-like coupling element 4 is in this case also provided with a drilled hole with an internal screw thread. The pipe clip 7 is provided with a threaded rod 9 provided with a corresponding screw thread and can thereby be screwed into the block-like coupling element 4. The pipe clip 7 has a bearing surface 10, by means of which it bears against the side of the coupling element 4 which is remote from the wall.

A fixing bolt 11 fixes the coupling element 4 in the hollow profiled section 3. The bolt 11 is fitted through a slot-like opening 12 in the hollow profiled section 3, the slot-like opening 12 running at least partially in the longitudinal direction of the hollow profiled section 3. Since the adjustment bolt 11 for fully fixing it can be displaced in the longitudinal direction of the hollow profiled section 3, the coupling element 4 can therefore be displaced in the longitudinal direction of the hollow profiled section 3, so that the distance between the wall 6 and the pipe clip 7 can be adjusted. There is then no need for the required length of the hollow profiled section 3 to be very accurately measured during its production and produced with a corresponding degree of accuracy.

It is also possible to create a coupling element 4 according to the invention of this type which can be adjusted in the longitudinal direction, with the adjustment of the coupling element 4 in the longitudinal direction being obtained in a different way. Another option is for the coupling element 4 to be provided with clamping means, by means of which the coupling element 4 can be clamped in the hollow profiled section 3.

However, the embodiment shown here is preferred, since with the standard profiled section used the slot over the length on one side or the slot-shaped openings optionally arranged at regular intervals on the opposite side of the profiled section can serve as slot-like opening 12 for the bolt 11.

By way of example, the attachment system 1 according to the invention can be mounted in the following way. First of all, the wall-attachment element 2 is attached to the wall 6 by means of threaded bolts 5 which are fitted through holes provided for this purpose in the wall-attachment element. Then, the elongate hollow profiled section 3 is attached to the wall-attachment element 2 by means of the bolts 8 and a washer plate or nut.

The coupling element 4 is first of all attached to the pipe clip 7 and then fitted into the second end of the hollow profiled section 3. Then, the coupling element 4 is fixed in the hollow profiled section 3 by tightening the bolt 11. However, it is also possible first of all to fix the coupling element 4 in the hollow profiled section 3 and then to fix the pipe clip 7 to the coupling element 4.

Then, a pipe or the like is placed into the pipe clip 7. After that, it may be possible to adjust the position of the coupling element 4 in the longitudinal direction of the hollow profiled section 3 by temporarily unscrewing the bolt 11. In this way, therefore, it is possible to adjust the distance between the wall and the pipe.

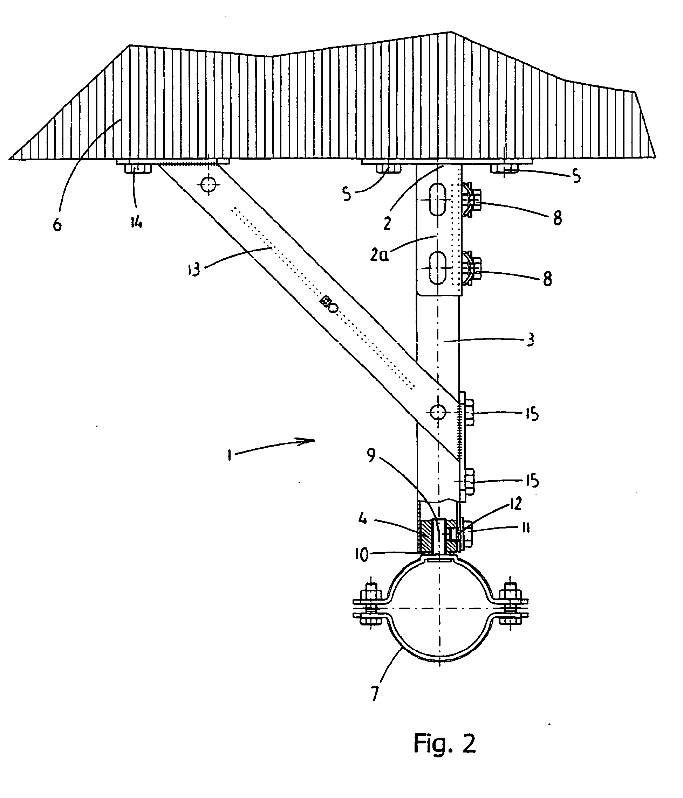

Figure 2 shows the attachment system 1 shown in Figure 1 with a pipe clip 7 attached to it, with the attachment system 1 having being provided with a strut 13 with connects the hollow profiled section 3 to the wall. The strut 13 has been attached to the wall 6 by means of one or more bolts 14 and has been attached to the hollow profiled section 3 by means of one or more bolts 15 and one or more nuts or a washer plate.

The fitting of a strut 13 of this type imparts additional strength to the attachment system, in particular against forces which are exerted on the attachment system 1 in a direction other than the longitudinal direction of the hollow profiled section 3.

The strut 13 is in this case shown as an integral element. It is also possible for a strut to be assembled from various elements, for example from a strut wall-attachment element, an elongate profiled section and a strut profiled-section attachment element. It is also possible to fit an angle plate or the like to increase the strength.

If necessary, it is possible for one or more further struts 13 to be provided to further strengthen the attachment system, for example in different directions from the strut fitted first.

## Claims

1. Attachment system (1) for attaching a pipe clip (7) to a wall (6), which pipe clip (7) has an annular body and is suitable for receiving a pipe or the like, the system comprising a wall-attachment element (2), which is to be attached to a wall (6), an elongate element having a first end and a second end, and a coupling feature for coupling the pipe clip (7) to the second end of the elongate element by means of a threaded rod (9) that extends in line with the elongate element, in such a manner that, after its attachment, the pipe clip (7) is located in line with the elongate element, wherein the elongate element, at the first end, is to be attached or has been attached to the wall-attachment element (2), **characterized in that** the elongate element is a C-profiled section (3) having a square or rectangular cross section with a slot arranged over the entire length on one side, and **in that** the coupling feature comprises a coupling element (4) which can be placed in or over the second end of the C-profiled section (3), and fixing means (11) for fixing the coupling element (4) to the C-profiled section (3), the coupling element (4) being designed to attach the pipe clip (7) to that side of the coupling element (4) which is remote from the wall (6).

2. Attachment system according to claim 1, **characterized in that** the coupling element (4), as seen in the longitudinal direction of the C-profiled section (3), is substantially complementary to the C-profiled section (3).

3. Attachment system according to claim 1 or 2, **characterized in that** the coupling element (4), in the longitudinal direction of the C-profiled section (3), can be fixed at various positions with respect to the C-profiled section (3).

4. Attachment system according to claim 1, **characterized in that** a number of holes are provided on the opposite side of the C-profiled section from the slot, these holes being arranged at preferably regular intervals in the longitudinal direction.

5. Attachment system according to one or more of claims 1-4, **characterized in that** the fixing means for fixing the coupling element (4) comprise a bolt (11) or the like which is placed through the slot or, if present, the holes opposite the slot in the C-profiled section (3) in the vicinity of the second end of the C-profiled section (3).

6. Attachment system according to one or more of claims 1-5, **characterized in that** the wall-attachment element and the profiled section are formed integrally.

7. Attachment system according to one or more of claims 1-5, **characterized in that** the wall-attachment element (2) is connected to the profiled section by means of a second coupling element (2a, 4'), which is attached to the wall-attachment element and is placed in or over the first end of the profiled section (3).

8. Attachment system according to claim 7, **characterized in that** the wall-attachment element (2) and the second coupling element (2a) are formed integrally.

9. Attachment system according to claim 7 or 8, **characterized in that** the second coupling element, in the longitudinal direction of the profiled section (3), can be fixed at various positions with respect to the profiled section (3).

10. Attachment system according to one or more of claims 1-5 or 7-9, **characterized in that** the profiled section (3) is attached to the wall-attachment element (2) by at least one screw connection, preferably by a plurality of screw connections.

11. Attachment system according to one or more of claims 1-10, **characterized in that** the attachment system comprises one or more struts (13).

12. Attachment system according to one or more of claims 1-11, **characterized in that** the coupling element (4) is provided with a stud, threaded bolt or the like, in which case a pipe clip (7) which is to be attached is provided with a corresponding threaded hole.

13. Attachment system according to one or more of claims 1-11, **characterized in that** the coupling element (4) comprises a threaded hole, in which case a pipe clip (7) which is to be attached is provided with a corresponding stud, threaded bolt or the like.

14. Attachment system according to one or more of claims 1-13, with a pipe clip (7) attached to it, in which a centre point of the generally annular body of the pipe clip (7) lies substantially on the longitudinal axis of the profiled section (3).

15. Attachment system with the pipe clip (7) attached to it according to claim 14, **characterized in that** the pipe clip (7) and that side of the coupling element (4) which is remote from the wall are provided with bearing surfaces (10) which bear against one another after the pipe clip (7) has been attached.

16. Attachment system with the pipe clip (7) attached to it according to claim 14 or 15, **characterized in that** the coupling element (4) and at least a section of the pipe clip (7) are formed integrally.

## Patentansprüche

1. Befestigungssystem (1) zum Befestigen einer Rohrschelle (7) an einer Wand (6), welche Rohrschelle (7) einen ringförmigen Körper hat und zur Aufnahme eines Rohres oder dergleichen geeignet ist, welches System ein an einer Wand (6) zu befestigendes Wandbefestigungselement (2), ein längliches Element mit einem ersten Ende und einem zweiten Ende, und eine Kupplungseinrichtung zum Ankuppeln der Rohrschelle (7) an dem zweiten Ende des länglichen Elements mittels einer Gewindestange (9) enthält, die sich in einer Linie mit dem länglichen Element in der Weise erstreckt, dass die Rohrschelle (7) nach ihrer Befestigung in einer Linie mit dem länglichen Element angeordnet ist, wobei das längliche Element an dem ersten Ende an dem Wandbefestigungselement (2) anzubringen ist oder angebracht worden ist, **dadurch gekennzeichnet, dass** das längliche Element ein C-Profilabschnitt (3) ist, der einen quadratischen oder rechteckigen Querschnitt mit einem an einer Seite über die gesamte Länge angeordneten Schlitz hat, und dadurch, dass die Kupplungseinrichtung ein Kupplungselement (4), das in dem oder über dem zweiten Ende des C-Profilabschnitts (3) angeordnet werden kann, und ein Befestigungsmittel (11) zum Befestigen des Kupplungselements (4) an dem C-Profilabschnitt (3) umfasst, welches Kupplungselement (4) so konstruiert ist, dass es die Rohrschelle (7) an der von der Wand (6) entfernten Seite des Kupplungselements (4) befestigt.

2. Befestigungssystem nach Anspruch 1, **dadurch gekennzeichnet, dass** das Kupplungselement (4) in Längsrichtung des C-Profilabschnitts (3) gesehen zu dem C-Profilabschnitt (3) im Wesentlichen komplementär ist.

3. Befestigungssystem nach Anspruch 1 oder 2, **dadurch gekennzeichnet, dass** das Kupplungselement (4) in Längsrichtung des C-Profilabschnitts (3) an verschiedenen Positionen relativ zu dem C-Profilabschnitt (3) befestigt werden kann.

4. Befestigungssystem nach Anspruch 1, **dadurch gekennzeichnet, dass** eine Anzahl von Löchern auf der dem Schlitz gegenüberliegenden Seite des C-Profilabschnitts vorgesehen sind, welche Löcher vorzugsweise in regelmäßigen Abständen in Längsrichtung angeordnet sind.

5. Befestigungssystem nach einem oder mehreren der Ansprüche 1-4, **dadurch gekennzeichnet, dass** das Befestigungsmittel zum Befestigen des Kupplungselements (4) einen Bolzen (11) oder dergleichen umfasst, der durch den Schlitz oder, sofern vorhanden, der durch die dem Schlitz gegenüberliegende Löcher in dem C-Profilabschnitt (3) in der Nähe des zweiten Endes des C-Profilabschnitts (3) angeordnet wird.

6. Befestigungssystem nach einem oder mehreren der Ansprüche 1-5, **dadurch gekennzeichnet, dass** das Wandbefestigungselement und der Profilabschnitt integral gebildet sind.

7. Befestigungssystem nach einem oder mehreren der Ansprüche 1-5, **dadurch gekennzeichnet, dass** das Wandbefestigungselement (2) mit dem Profilabschnitt mittels eines zweiten Kupplungselements (2a, 4') verbunden ist, das an dem Wandbefestigungselement befestigt ist und in dem oder über dem ersten Ende des Profilabschnitts (3) angeordnet ist.

8. Befestigungssystem nach Anspruch 7, **dadurch gekennzeichnet, dass** das Wandbefestigungselement (2) und das zweite Kupplungselement (2a) integral gebildet sind.

9. Befestigungssystem nach Anspruch 7 oder 8, **dadurch gekennzeichnet, dass** das zweite Kupplungselement in Längsrichtung des Profilabschnitts (3) an verschiedenen Positionen relativ zum Profilabschnitt (3) fixiert werden kann.

10. Befestigungssystem nach einem oder mehreren der Ansprüche 1-5 oder 7-9, **dadurch gekennzeichnet, dass** der Profilabschnitt (3) an dem Wandbefestigungselement (2) durch mindestens eine Schraubenverbindung, vorzugsweise durch mehrere Schraubenverbindungen, befestigt ist.

11. Befestigungssystem nach einem oder mehreren der Ansprüche 1-10, **dadurch gekennzeichnet, dass** das Befestigungssystem eine oder mehrere Streben (13) enthält.

12. Befestigungssystem nach einem oder mehreren der Ansprüche 1-11, **dadurch gekennzeichnet, dass** das Kupplungselement (4) mit einem Stehbolzen, einem Gewindebolzen oder dergleichen versehen ist, wobei in diesem Fall eine zu befestigende Rohrschelle (7) mit einem entsprechenden Gewindeloch versehen ist.

13. Befestigungssystem nach einem oder mehreren der Ansprüche 1-11, **dadurch gekennzeichnet, dass** das Kupplungselement (4) ein Gewindeloch aufweist, wobei in diesem Fall eine zu befestigende Rohrschelle (7) mit einem entsprechenden Stehbolzen, Gewindebolzen oder dergleichen versehen ist.

14. Befestigungssystem nach einem oder mehreren der Ansprüche 1-13 mit einer daran befestigten Rohrschelle (7), bei welcher ein zentraler Punkt des hauptsächlich ringförmigen Körpers der Rohrschelle (7) im Wesentlichen auf der Längsachse des Profilabschnitts (3) liegt.

15. Befestigungssystem mit der daran befestigten Rohrschelle (7) nach Anspruch 14, **dadurch gekennzeichnet, dass** die Rohrschelle (7) und die Seite des Kupplungselements (4), die von der Wand entfernt ist, mit Lagerflächen (10) versehen sind, die nach dem Befestigen der Rohrschelle (7) aneinander anliegen.

16. Befestigungssystem mit der daran befestigten Rohrschelle (7) nach Anspruch 14 oder 15, **dadurch gekennzeichnet, dass** das Kupplungselement (4) und mindestens ein Abschnitt der Rohrschelle (7) integral gebildet sind.

## Revendications

1. Système de fixation (1) prévu pour fixer un collier de serrage (7) à une paroi (6), ledit collier de serrage (7) présentant un corps annulaire et étant adapté pour recevoir un conduit ou similaire, le système comprenant un élément (2) de fixation à la paroi, à fixer sur une paroi (6), un élément allongé présentant une première extrémité et une seconde extrémité, et un dispositif d'accouplement pour accoupler le collier de serrage (7) à la seconde extrémité de l'élément allongé au moyen d'une tige filetée (9) qui s'étend dans l'alignement de l'élément allongé, de telle manière que, après avoir été fixé, le collier de serrage (7) est en alignement avec l'élément allongé, ledit élément allongé devant être ou ayant été fixé, à la première extrémité, à l'élément (2) de fixation à la paroi, ledit système étant **caractérisé en ce que** l'élément allongé est un profilé en C (3) de section transversale carrée ou rectangulaire comportant une fente ménagée sur toute la longueur sur une des faces, et **en ce que** le dispositif d'accouplement comprend un élément d'accouplement (4) qui peut être placé dans ou sur la seconde extrémité du profilé en C (3), et des moyens de fixation (11) pour fixer l'élément d'accouplement (4) au profilé en C (3), l'élément d'accouplement (4) étant configuré de telle manière à fixer le collier de serrage (7) du côté de l'élément d'accouplement (4) qui est éloigné de la paroi (6).

2. Système de fixation selon la revendication 1, **caractérisé en ce que** l'élément d'accouplement (4), lorsqu'il est vu dans la direction longitudinale du profilé en C (3), est sensiblement complémentaire du profilé en C (3).

3. Système de fixation selon la revendication 1 ou 2, **caractérisé en ce que** l'élément d'accouplement (4), dans la direction longitudinale du profilé en C (3), peut être fixé à différentes positions par rapport au profilé en C (3).

4. Système de fixation selon la revendication 1, **caractérisé en ce qu'**un certain nombre de trous sont ménagés sur la face du profilé en C qui est opposée à celle comportant la fente, lesdits trous étant ménagés à des intervalles de préférence réguliers dans la direction longitudinale.

5. Système de fixation selon une ou plusieurs des revendications 1-4, **caractérisé en ce que** les éléments de fixation pour fixer l'élément d'accouplement (4) comprennent un boulon (11) ou similaire qui est inséré dans la fente ou, s'ils existent, les trous situés à l'opposé de la fente ménagée dans le profilé en C (3), au voisinage de la seconde extrémité du profilé en C (3).

6. Système de fixation selon une ou plusieurs des revendications 1-5, **caractérisé en ce que** l'élément de fixation à la paroi et le profilé sont formés solidairement.

7. Système de fixation selon une ou plusieurs des revendications 1-5, **caractérisé en ce que** l'élément (2) de fixation à la paroi est relié au profilé au moyen d'un second élément d'accouplement (2a, 4') qui est fixé à l'élément de fixation à la paroi et est placé dans ou sur la première extrémité du profilé (3).

8. Système de fixation selon la revendication 7, **caractérisé en ce que** l'élément de fixation à la paroi (2) et le second élément d'accouplement (2a) sont formés solidairement.

9. Système de fixation selon la revendication 7 ou 8, **caractérisé en ce que** le second élément d'accouplement, dans la direction longitudinale du profilé (3), peut être fixé à différentes positions par rapport au profilé (3).

10. Système de fixation selon une ou plusieurs des revendications 1-5 ou 7-9, **caractérisé en ce que** le profilé (3) est fixé à l'élément (2) de fixation à la paroi par au moins une connexion à vis, et de préférence par une pluralité de connexions à vis.

11. Système de fixation selon une ou plusieurs des revendications 1-10, **caractérisé en ce que** le système de fixation comprend une ou plusieurs entretoises (13).

12. Système de fixation selon une ou plusieurs des revendications 1-11, **caractérisé en ce que** l'élément d'accouplement (4) est pourvu d'un goujon, boulon fileté ou similaire, auquel cas un collier de serrage (7) devant être fixé est pourvu d'un trou taraudé correspondant.

13. Système de fixation selon une ou plusieurs des revendications 1-11, **caractérisé en ce que** l'élément d'accouplement (4) comprend un trou taraudé, auquel cas un collier de serrage (7) devant être fixé est pourvu d'un goujon, d'un boulon fileté, ou similaire, qui lui correspond.

14. Système de fixation selon une ou plusieurs des revendications 1-13, auquel est fixé un collier de serrage (7), dans lequel un point central du corps sensiblement annulaire du collier de serrage (7) est situé sensiblement sur l'axe longitudinal du profilé (3).

15. Système de fixation auquel est fixé le collier de serrage (7) selon la revendication 14, **caractérisé en ce que** le collier de serrage (7) et le côté de l'élément d'accouplement (4) qui est éloigné de la paroi présentent des surfaces d'appui (10) qui sont en appui l'une sur l'autre après que le collier de serrage (7) ait été fixé.

16. Système de fixation auquel est fixé le collier de serrage (7) selon la revendication 14 ou 15, **caractérisé en ce que** l'élément d'accouplement (4) et au moins une partie du collier de serrage (7) sont formés solidairement.
